# EUROPEAN PATENT APPLICATION

(11) **EP 3 495 519 A1**
(43) Date of publication of application: **12.06.2019**
(21) Application number: 17836558.1
(22) Date of filing: 12.04.2017
(51) Int. Cl.: C22C 9/00, F16L 9/02, F28F 21/08

(54) **HIGHLY CORROSION RESISTANT COPPER PIPE**

(30) Priority: 04.08.2016 JP 2016153509
(71) Applicant: UACJ Corporation, Tokyo 100-0004 (JP); UACJ Copper Tube Corporation, Toyokawa-city Aichi 4411295 (JP)
(72) Inventor: KUMAGAI, Masaki, Tokyo 100-0004 (JP); KYO, Yoshihiko, Tokyo 100-0004 (JP); MAE, Saori, Tokyo 100-0004 (JP)
(74) Representative: Hamer, Christopher K.
(86) International application number: PCT/JP2017/015004
(87) International publication number: WO 2018/025451

(57) **Abstract**

The purpose of the present invention is to provide a copper pipe that is capable of exhibiting higher corrosion resistance with respect to formicary corrosion, can be suitably used in air conditioners and freezing equipment, and has excellent long-term anti-corrosion properties, and to advantageously improve the service life of equipment configured using such copper pipe. The copper pipe is configured from a material, which contains P (phosphorus) in a proportion of 0.15-0.50 weight%, in which oxygen content is 30 ppm by weight or less, and the balance is made of Cu and unavoidable impurities.

## Description

### TECHNICAL FIELD

The present invention relates to an improvement of a highly corrosion-resistant copper tube, and more particularly relates to a technique of improving corrosion resistance of the copper tube, which copper tube is suitably usable as a heat transfer tube and a refrigerant tube in air-conditioning equipment and refrigerating equipment, for example.

### BACKGROUND ART

As a heat transfer tube, a refrigerant tube (tubes arranged inside desired equipment) and the like, which are used, for example, in air-conditioning equipment and refrigerating equipment, a tube made of a phosphorus (P)-deoxidized copper (JIS-H3300-C1220T) having excellent properties in terms of corrosion resistance, brazeability, heat conductivity and bending workability, for example, has been mainly used.

However, it is recognized that the above-described phosphorus-deoxidized copper tube used in the air-conditioning equipment and the refrigerating equipment suffers from generation of so-called "ant nest corrosion" or "formicary corrosion" which is an unusual corrosion that progresses in the form of an ants' nest from a surface of the tube in a direction of the wall thickness. The ant nest corrosion is considered to be generated in a damp environment by a corrosive medium in the form of a lower carboxylic acid such as a formic acid and an acetic acid. Further, it is recognized that such corrosion is also generated in the presence of a chlorine-based organic solvent such as 1,1,1-trichloroethane, particular kinds of lubricating oil, and formaldehyde, for example. It is known that generation of the ant nest corrosion is particularly remarkable where the phosphorus-deoxidized copper tube is used as a conduit in the air-conditioning equipment and the refrigerating equipment, which conduit is liable to dewing. Once the ant nest corrosion is generated, it progresses rapidly and penetrates through the wall of the copper tube in a short time, thereby giving rise to a problem that the equipment becomes unworkable.

For this reason, JP6-122932A proposes a corrosion-resistant copper tube having a high strength, which tube includes 0.0025-0.01% by weight of P (phosphorus) and the balance being Cu (copper) and conventional impurities, or further has an oxygen content of not higher than 20ppm by weight. The document discloses that such a copper tube enjoys an improved resistance to the ant nest corrosion. In summary, the technique aims to achieve a higher resistance to the ant nest corrosion than that of the conventional phosphorus-deoxidized copper tube by reducing the P content in the phosphorus-deoxidized copper tube, because the ant nest corrosion is suppressed in an oxygen-free copper tube containing an extremely small amount of P. However, the above-described copper tube having a reduced amount of P and a low oxygen concentration does not have a sufficient degree of corrosion resistance. Specifically, it is difficult for the copper tube proposed in the above-described technique to exhibit the resistance to the ant nest corrosion for a long period of time.

Under these circumstances, WO2014/148127A1 proposes a highly corrosion-resistant copper tube formed of a copper material comprising 0.05-1.0% by weight of P and the balance consisting of Cu and inevitable impurities, and discloses that such a copper tube enjoys an improved resistance to the ant nest corrosion. In summary, it indicates that the copper tube having the improved resistance to the ant nest corrosion can be practically advantageously obtained by employing a tube material having a P content larger than that of the conventional tube material made of the phosphorus-deoxidized copper.

However, even the copper tube obtained with an increased P content may suffer from generation of the ant nest corrosion when it is subjected to a severer corrosive environment for a long period of time. Therefore, it is desired to develop a copper tube which can exhibit an even higher resistance to the ant nest corrosion than the above-described copper tube obtained with an increased P content, so that a service life and reliability of equipment employing the copper tube can be improved.

### PRIOR ART DOCUMENTS

### PATENT DOCUMENTS

Patent Document 1: JP6-122932A
Patent Document 2: WO2014/148127A1

### SUMMARY OF THE INVENTION

### TECHNICAL PROBLEMS

The present invention was made in view of the background art described above. It is therefore a technical problem of the invention to provide a highly corrosion-resistant copper tube which can exhibit a higher resistance to the ant nest corrosion for a long period of time, and which is suitably usable as a heat transfer tube and a refrigerant tube in air-conditioning equipment and refrigerating equipment. It is another problem of the invention to advantageously extend a service life of equipment produced by employing such a copper tube.

### SOLUTION TO PROBLEMS

The inventors of the present invention made further intensive studies on the ant nest corrosion generated in the copper tube used in the air-conditioning equipment, the refrigerating equipment and the like, and found that an improved corrosion resistance of the copper tube can be further advantageously enjoyed for a long period of time by controlling an oxygen content within a specific range in a copper tube containing P in a ratio of 0.15-0.50% by weight. The present invention was completed based on this finding.

Based on the above-described finding, the gist of the present invention is to provide a highly corrosion-resistant copper tube which is formed of a copper material comprising a copper alloy consisting of 0.15-0.50% by weight of phosphorus and the balance being copper and inevitable impurities, the copper material having an oxygen content of not higher than 30ppm by weight.

In summary, in the invention, a long-term corrosion resistance to the ant nest corrosion is further effectively improved by setting the oxygen content of the copper material to be not higher than 30ppm by weight in the corrosion-resistant copper tube which is formed of the copper material comprising the copper alloy consisting of 0.15-0.50% by weight of phosphorus and the balance being copper and inevitable impurities.

According to one preferable embodiment of the highly corrosion-resistant copper tube according to the invention, the oxygen content of the copper material is not higher than 20ppm by weight.

According to another preferable embodiment of the highly corrosion-resistant copper tube according to the invention, a total amount of the inevitable impurities is not higher than 0.05% by weight.

According to a further preferable embodiment of the highly corrosion-resistant copper tube according to the invention, the copper tube is arranged in a damp environment and subjected to corrosion that progresses in the form of an ants' nest from a surface of the tube in a direction of a wall thickness of the tube by a corrosive medium in the form of a lower carboxylic acid.

Furthermore, the invention also provides a heat transfer tube and a refrigerant tube (tubes arranged inside desired equipment) in air-conditioning equipment or refrigerating equipment.

In addition, the present invention provides a method of improving a corrosion resistance of a copper tube against ant nest corrosion which is generated by a corrosive medium in the form of a lower carboxylic acid in a damp environment and progresses from a surface of the copper tube used for air-conditioning equipment or refrigerating equipment in the damp environment, wherein the copper tube is formed of a copper material comprising a copper alloy consisting of 0.15-0.50% by weight of phosphorus and the balance being copper and inevitable impurities, the copper material having an oxygen content of not higher than 30ppm by weight.

### ADVANTAGEOUS EFFECTS OF THE INVENTION

According to the present invention, a practically useful copper tube exhibiting an excellent corrosion resistance against the ant nest corrosion, which corrosion resistance is superior to that of the conventional copper tube and is effective for a long period of time, can be provided. In addition, by employing the copper tube as the heat transfer tube or the refrigerant tube (tubes arranged inside desired equipment), for example, which are used in the air-conditioning equipment or the refrigerating equipment, the service life of the equipment can be further advantageously improved.

### BRIEF DESCRIPTION OF THE DRAWINGS

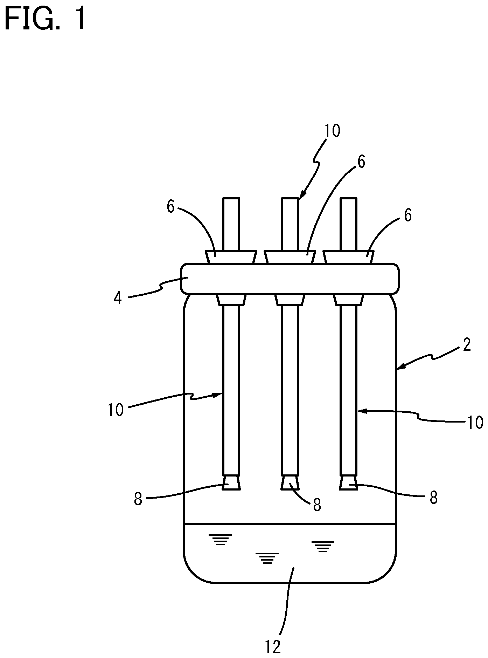

Fig. 1 is a schematic cross sectional view showing an apparatus used for a corrosion resistance test of the tube in illustrated examples.

### MODE FOR CARRYING OUT THE INVENTION

The present invention has a remarkable feature that a highly corrosion-resistant copper tube according to the invention is formed of a copper material which has a phosphorus (P) content held within a range of 0.15-0.50% by weight and has an oxygen content of not higher than 30ppm by weight, so that the copper tube according to the invention is configured to have a concentration of P higher than that of the conventional copper tube and the oxygen content of not higher than 30ppm by weight at the same time. By including a high concentration of P and controlling the oxygen content to be not higher than 30ppm by weight, the type of corrosion generated in the copper tube shifts from a localized corrosion which progresses from the surface of the tube in the vertical direction of the axis of the tube (a direction penetrating the thickness of the tube) to a uniform corrosion which progresses in the horizontal direction of the axis of the tube (a direction extending over the surface of the tube) even under a severer corrosive environment. Specifically, by defining both of the P content and the oxygen content at the same time, generation of the localized corrosion in the copper tube is effectively suppressed or prevented, and the copper tube can exhibit a corrosion resistance which is considerably higher than that of the conventional copper tube for a long period of time.

However, the P content of the copper tube is set so as to be not lower than 0.15% by weight, because where the P content of the copper tube is lower than 0.15% by weight, the ant nest corrosion, which is the above-described localized corrosion, is likely to be generated. On the other hand, a P content of more than 0.50% by weight does not permit a substantially effective improvement in the resistance of the copper tube against the ant nest corrosion, and even causes deterioration of workability of the copper tube during production, thereby giving rise to a problem of cracking of the copper tube, for example. For this reason, the upper limit of the P content needs to be 0.50% by weight.

Where the copper material constituting the copper tube has an oxygen content of higher than 30ppm by weight, the above-described localized corrosion may be generated when it is exposed to a severer corrosive environment for a long period of time, even if the copper tube includes the predetermined amount of P. For this reason, in the invention, the oxygen content needs to be not higher than 30ppm by weight. It is preferable to set the oxygen content to be not higher than 20ppm by weight in order to obtain the corrosion resistance effective for a long period of time under the severer corrosive environment. The lower limit of the oxygen content is generally set to be not lower than 5ppm by weight, preferably not lower than 7ppm by weight, and more preferably not lower than 10ppm by weight, to practically obtain the effective corrosion resistance.

The highly corrosion-resistant copper tube according to the invention is formed of a copper (Cu) material comprising a copper alloy consisting of the above-described amount of P and the oxygen, and the balance being Cu and inevitable impurities. In the invention, a total amount of the inevitable impurities such as Fe, Pb and Sn is generally controlled so as to be not more than 0.05% by weight.

In production of the desired copper tube by using the Cu material having a composition according to the invention, conventional production processes are employed. One of the processes include, for example, casting step of an ingot or a billet, hot extrusion step of a tube and drawing step of the tube. To keep the oxygen content low according to the invention, various known means for removal of the oxygen or prevention of contamination by the oxygen may be suitably employed. In one example of such methods or equipment, a Cu molten metal is intercepted from the atmosphere during production of the Cu molten metal. More particularly, the Cu molten metal can be intercepted from the atmosphere as follows. When a Cu source material is melted, a cover is disposed over the top of a melting furnace, and a nitrogen gas is introduced into the inside of the cover to fill the melting furnace. Furthermore, a cover is disposed also over the Cu molten metal in a passage from the melting furnace to a casting site, and the nitrogen gas is introduced to fill the passage. Thus, the oxygen content is advantageously reduced.

Sizes such as an outside diameter and a thickness of the copper tube obtained according to the invention as described above are suitably determined according to the use of the copper tube. When the copper tube according to the invention is employed as the heat transfer tube in the air-conditioning equipment and the refrigerating equipment, the copper tube may have smooth (or non-grooved) inner and outer surfaces. Alternatively, the heat transfer tube may advantageously have internal or external grooves of various shapes formed by various known internal or external working. When the copper tube is employed as the refrigerant tube in the air-conditioning equipment and the refrigerating equipment, the refrigerant tube generally has smooth inner and outer surfaces.

### EXAMPLES

To clarify the present invention more specifically, some examples according to the present invention will be described. It is to be understood that the invention is by no means limited by details of the illustrated examples, but may be embodied with various changes, modifications and improvements which are not described herein, and which may occur to those skilled in the art, without departing from the spirit of the invention.

First, various billets were produced, each of which billets has a composition having a P content and an oxygen content indicated in Table 1 given below and the balance consisting of Cu and inevitable impurities. The billets were subjected to the conventional process including hot-extrusion to produce a tube and drawing of the tube, so that various copper tubes (Nos. 1 to 6) having an outer diameter of 9.52mm and a thickness of 0.41mm were obtained. The obtained copper tubes were then subjected to an ant nest corrosion test described below. The oxygen content of each of the billets was controlled by intercepting the Cu source material to provide the billet from the atmosphere, and suitably changing the form of the interception. That is, when the Cu source material was melted to provide a Cu molten metal, covers were disposed over the top of a melting furnace and also over the Cu molten metal in a passage from the melting furnace to a casting site, and the nitrogen gas was introduced to the inside of the covers to intercept the Cu molten metal from the atmosphere. It is noted that the oxygen analysis with respect to each of the billets (copper tubes) was conducted according to the Inert Gas Fusion-Infrared Absorptiometry by using TC-600 type oxygen/nitrogen analyzer manufactured by LECO CORPORATION (U.S.A). Furthermore, amounts of elements included as the inevitable impurities (S, Ag, Pb, Se, Te, Bi, Ni, Sn, Sb, As, Si and Fe) in the billets were analyzed. The total amount of the inevitable impurities was not more than 0.05% by weight in each of the billets.

As Comparative Examples, a copper tube No. 7 having a high degree of the oxygen content and a copper tube No. 10 having a high degree of the P content were provided. Furthermore, copper tubes Nos. 8 and 9 consisting of the phosphorus-deoxidized copper were provided. In production of the copper tubes Nos. 9 and 10, the Cu molten metal was intercepted from the atmosphere as in the above-described copper tubes Nos. 1-6. On the other hand, in production of the copper tubes Nos. 7 and 8, the Cu molten metal was not intercepted from the atmosphere, and the Cu molten metal in the melting furnace and in the passage from the melting furnace to the casting site was subjected to contact with the atmosphere. It is noted that the copper tube No. 10 was made of a Cu material containing an excessive amount of P, so that the tube suffered from deficiencies such as cracking during tube-making, and a copper tube to be subjected to the corrosion test could not be obtained. Thus, the desired corrosion test could not be conducted.

**Table 1**

| Copper tube No. | Kind of copper tube | P content (% by weight) | Oxygen content (ppm by weight) |
|---|---|---|---|
| 1 | Example | 0.16 | 17 |
| 2 | Example | 0.22 | 16 |
| 3 | Example | 0.24 | 14 |
| 4 | Example | 0.3 | 15 |
| 5 | Example | 0.4 | 14 |
| 6 | Example | 0.29 | 28 |
| 7 | Comparative Example | 0.28 | 39 |
| 8 | Phosphorus-deoxidized copper tube | 0.03 | 40 |
| 9 | Phosphorus-deoxidized copper tube | 0.03 | 28 |
| 10 | Comparative Example | 0.55 | 15 |

Subsequently, each of the thus obtained copper tubes was subjected to the ant nest corrosion test by using a test apparatus shown in Fig. 1. In Fig. 1, a reference numeral 2 represents a plastic container which has a capacity of 2L and which can be hermetically sealed with a cap 4. Silicone plugs 6 are attached to the cap 4 such that the plugs 6 extend through the cap 4. Copper tubes 10 are inserted into the plastic container 2 by a predetermined length, such that the copper tubes 10 extend through the respective silicone plugs 6. Lower open ends of the copper tubes 10 are closed with silicone plugs 8. Furthermore, 100mL of an aqueous formic acid solution having a predetermined concentration is accommodated in the plastic container 2, such that the copper tubes 10 do not contact with the aqueous solution.

In the ant nest corrosion test, three kinds of aqueous formic acid solutions 12 whose concentrations were respectively set to be 0.01%, 0.1% and 1%, were provided. The copper tubes 10 were set in the plastic container 2 in which each kind of the aqueous formic acid solutions 12 was accommodated, and the plastic container 2 was left within a constant temperature bath at a temperature of 40°C. The plastic container 2 with the copper tubes 10 was taken out of the bath and left for two hours at room temperature (15°C) each day, to cause dewing on surfaces of the copper tubes 10 due to a difference between the temperature of the constant temperature bath and the room temperature. The copper tubes 10 were subjected to the corrosion test under the above-described conditions for 80 days.

Each of the copper tubes subjected to the corrosion test was examined with respect to the cross section of the tube. Then, each of the copper tubes was measured of the maximum corrosion depth from the outer surface in terms of the respective aqueous formic acid solutions with the different concentrations. The results are shown in the following Table 2.

**Table 2**

| Copper tube No. | Maximum corrosion depth (mm) | | |
|---|---|---|---|
| | Concentration of formic acid: 0.01% | Concentration of formic acid: 0.1% | Concentration of formic acid: 1% |
| 1 | 0.1 | 0.15 | 0.28 |
| 2 | 0.05 | 0.12 | 0.22 |
| 3 | 0.03 | 0.08 | 0.18 |
| 4 | 0.02 | 0.04 | 0.15 |
| 5 | 0.02 | 0.02 | 0.15 |
| 6 | 0.09 | 0.17 | 0.28 |
| 7 | 0.28 | 0.41 | 0.41 |
| 8 | 0.35 | 0.41 | 0.41 |
| 9 | 0.3 | 0.38 | 0.41 |
| 10 | - | - | - |

As is apparent from the results shown in Table 2, in the long-term corrosion test using the aqueous formic acid solutions having the concentration of 0.01% and 0.1%, the copper tubes Nos. 1-6 having the P content within the range of 0.15-0.50% by weight and the oxygen content of not higher than 30ppm by weight did not suffer from the ant nest corrosion, and merely had a slight corrosion generated on the outer surfaces of the tubes. Furthermore, in the long-term corrosion test in a severe environment using the aqueous formic acid solution having the concentration of 1%, the copper tubes Nos. 1-6 suffered from a certain degree of corrosion, but the corrosion was not in the form of the ant nest corrosion. It was also recognized that the maximum corrosion depths of the copper tubes Nos. 1-6 were significantly shallower than those of the phosphorus-deoxidized copper tubes and the copper tubes in the Comparative Examples.

On the contrary, the Comparative Example (copper tube No. 7) having the P content within the range of the invention and the oxygen content of 39ppm by weight, which is higher than 30ppm by weight, and the phosphorus-deoxidized copper tubes (copper tubes Nos. 8 and 9) having the P content outside the range of the invention suffered from a remarkable ant nest corrosion in the long-term ant nest corrosion test using the 0.1% and 1% aqueous formic acid solutions. It was recognized that the copper tubes of the Comparative Examples were inferior to the copper tubes Nos. 1-6 in terms of the corrosion resistance, and had problems in practical use.

### NOMENCLATURE OF REFERENCE SIGNS

| | |
|---|---|
| 2: Plastic container | 4: Cap |
| 6: Silicone plugs | 8: Silicone plugs |
| 10: Copper tubes | 12: Aqueous formic acid solution |

## Claims

1. A highly corrosion-resistant copper tube which is formed of a copper material comprising a copper alloy consisting of 0.15-0.50% by weight of phosphorus and the balance being copper and inevitable impurities, the copper material having an oxygen content of not higher than 30ppm by weight.

2. The highly corrosion-resistant copper tube according to claim 1, wherein the oxygen content of the copper material is not higher than 20ppm by weight.

3. The highly corrosion-resistant copper tube according to claim 1 or 2, wherein a total amount of the inevitable impurities is not higher than 0.05% by weight.

4. The highly corrosion-resistant copper tube according to any one of claims 1 to 3, wherein the copper tube is arranged in a damp environment and subjected to corrosion that progresses in the form of an ants' nest from a surface of the tube in a direction of a wall thickness of the tube by a corrosive medium in the form of a lower carboxylic acid.

5. A heat transfer tube for air-conditioning equipment or refrigerating equipment, consisting of the highly corrosion-resistant copper tube according to any one of claims 1 to 4.

6. A refrigerant tube for air-conditioning equipment or refrigerating equipment, consisting of the highly corrosion-resistant copper tube according to any one of claims 1 to 4.

7. A method of improving a corrosion resistance of a copper tube against ant nest corrosion which is generated by a corrosive medium in the form of a lower carboxylic acid in a damp environment and progresses from a surface of the copper tube used for air-conditioning equipment or refrigerating equipment in the damp environment, wherein
the copper tube is formed of a copper material comprising a copper alloy consisting of 0.15-0.50% by weight of phosphorus and the balance being copper and inevitable impurities, the copper material having an oxygen content of not higher than 30ppm by weight.
